# EUROPEAN PATENT SPECIFICATION

(11) **EP 1 704 609 B1**
(45) Date of publication and mention of the grant of the patent: **23.03.2011**
(21) Application number: 05773775.1
(22) Date of filing: 23.06.2005
(51) Int. Cl.: H01M 4/88, H01M 4/94, H01M 4/96, H01M 8/02

(54) **GAS DIFFUSION ELECTRODES AND MEMBRANE ELECTRODE ASSEMBLIES FOR PROTON EXCHANGE MEMBRANE FUEL CELLS**
GASDIFFUSIONSELEKTRODEN UND MEMBRANELEKTRODENBAUGRUPPEN FÜR PROTONENAUSTAUSCHMEMBRAN-BRENNSTOFFZELLEN
ELECTRODES DE DIFFUSION GAZEUSE ET ENSEMBLE ELECTRODES A MEMBRANE POUR PILES A COMBUSTIBLE A MEMBRANE ECHANGEUSE DE PROTONS

(30) Priority: 23.06.2004 CN 200410027867
(43) Date of publication of application: 27.09.2006
(73) Proprietor: Byd Company Limited, Shenzhen City, Guangdong 518119 (CN)
(72) Inventor: DONG, Junqing, BYD Company Limited, Shenzhen, Guangdong 518119 (CN); ZHANG, Riqing, BYD COMPANY LIMITED, Shenzhen, Guangdong 518119 (CN)
(74) Representative: Rupprecht, Kay
(86) International application number: PCT/CN2005/000904
(87) International publication number: WO 2006/000156

(56) References cited:
- CN-A- 1 108 818
- CN-A- 1 479 949
- JP-A- 01 041 171
- JP-A- 07 147 162
- JP-A- 09 041 181
- JP-A- 62 213 066
- JP-A- 62 249 360
- US-A- 5 266 177
- US-A- 6 136 412

## Description

### Cross Reference

This application claims priority from a Chinese patent application entitled "Methods for Fabricating Membrane Electrode Assemblies for Proton Exchange Membrane Fuel Cells" filed on June 23, 2004, having a Chinese Application No. 200410027867.2.

### Field of Invention

This invention relates to the fabrication methods of electrodes for fuel cells. Particularly, it relates to the fabrication methods for membrane electrode assemblies of proton exchange membrane fuel cells and their components, including gas diffusion electrodes.

### Background

Document US 5,266,177 A discloses a method for preparing a reaction layer of a gas permeable electrode. The conventional method comprises the steps of mixing carbon powder and a hydrophobic binding agent, hot-pressing the mixture and cooling the mixture under the hot-pressing conditions or immediately after the hot-pressing.

Document US 6,136,412 A discloses a membrane electrode assembly comprising an ion conducting membrane and one or more electrode layers that comprise nanostructured elements, wherein the nanostructured elements are in incomplete contact with the ion conducting membrane.

Proton exchange membrane fuel cells are devices that produce electric energy from electrochemical reactions between the hydrogen ion producing fuel and oxygenic gases such as oxygen or air. These fuel cells are one of the electrical sources for the future because their noise level is low; they have high energy-conversion efficiency, and, they do not cause environmental pollution. They can be used as the power source in small portable electrical power supplies, small home power generators, and electric automobiles.

The core of a proton exchange membrane fuel cell is the membrane electrode assembly. This is where the electrochemical reaction occurs and where simultaneous conduction functions for protons and electrons are needed. Its structure and properties significantly affect the synthetic electrical properties of the proton exchange membrane fuel cells.

Currently, there are several different methods for fabricating these membrane electrode assemblies. The quantity of the catalyst used by these methods is also gradually decreasing. The customary method for fabricating a membrane electrode assembly is: mixing catalyst, a predetermined quantity of solvent, binding agent and proton exchange resins; dispersing uniformly with ultrasound; coating the catalyst paste uniformly on conductive carbon paper or carbon cloth; drying with heat; spray coating a layer of proton exchange resin solution on the surface of the catalyst layer to form an interface between the electrode and proton exchange membrane, hot pressing at a pre-determined temperature and pressure the negative electrode, positive electrode and proton exchange membrane together to form a unit. Although this fabrication method for membrane electrodes is easy, the surfaces of the diffusion and catalyst layers on the carbon paper cannot always be made uniformly smooth. After drying, these surfaces become rough and uneven, reducing the utilization rate of the catalyst in the catalyst layer. In addition, the rough surfaces will also result in poor contact at the interface between the catalyst layer and proton exchange membrane such that defects are easily created and the properties of the membrane electrodes are affected.

Chinese patent CN1471186A, "Combination of Electrolyte Membrane Electrode Used in Fuel Cells, Using this Type of Fuel Cell and their Fabrication Methods," disclosed a method for fabricating membrane electrodes using transfer printing. This method includes the following steps: mixing a catalyst with a macromolecular electrolyte; coating the mixture on a thin slice for the transfer printing; drying the catalyst paste by heat; joining together the thin slices with the catalyst layer and proton exchange membrane by pressing at a high temperature and a high pressure; peeling off the slice; and hot-pressing the catalyst layer with the gas diffusion layer such that the three layers are joined as one to form a complete MEA. This fabrication method enables the fabrication of electrodes with a thinner catalyst layer as the interface between the catalyst layer and membrane is continuous. However, this fabrication method is complicated as it involves multiple steps. In addition, during the transfer printing, a partial catalyst layer can easily adhere to the slice and be peeled off with the slice. Therefore, the properties of the electrode are affected as the transfer of the catalyst layer may not always be complete and the evenness of the catalyst layer may not always be even.

Due to the limitations of the prior art, it is therefore desirable to have novel methods of fabricating membrane electrode assemblies that are convenient, easy, and fast, and that produce membrane electrodes that have excellent synthetic electrical properties.

### Summary of Invention

An object of this invention is to provide fabrication methods for membrane electrode assemblies of proton exchange membrane fuel cells that are convenient, easy, and fast.

Another object of this invention is to provide fabrication methods for membrane electrodes with excellent synthetic electrical properties.

Briefly, this invention discloses the fabrication methods for membrane electrode assemblies of proton exchange membrane fuel cells, including gas diffusion electrodes. The fabrication methods for gas diffusion electrodes include the following steps: fabricating a conductive substrate; forming a layer of carbon containing material onto said conductive substrate; subjecting said conductive substrate with said carbon containing material to pressure at a predetermined temperature; cooling said conductive substrate with said material having carbon under pressure to obtain a gas diffusion layer on said conductive substrate; coating a layer of catalyst containing material onto said gas diffusion layer; subjecting said layer of catalyst containing material with gas diffusion layer and conductive substrate to pressure at another predetermined temperature; cooling under pressure to form a gas diffusion electrode. The fabrication of the membrane electrode assemblies include the following steps: placing and aligning two gas diffusion electrodes on the two sides of a membrane, subjecting these two gas diffusion electrodes with the membrane under pressure at a predetermined temperature, and then cooling said diffusion electrodes with said membrane under pressure to form a membrane electrode assembly.

An advantage of this invention is that the fabrication methods of the present invention are convenient, easy, and fast.

Another advantage of the present invention is that the membrane electrodes fabricated using the methods of this invention have excellent synthetic electrical properties.

### Detailed Description of the Preferred Embodiments

### Fabrication of Embodiments of Gas Diffusion Electrodes

The presently preferred methods of the present invention for the fabrication of the gas diffusion electrodes include the steps of claim 1;

In the preferred methods, one or more of the following conditions can be selected:
- The first cooling is conducted either naturally or with water;
- The thickness of the gas diffusion layer after hot pressing is between 100 and 600 micrometers;
- The thickness of the gas diffusion layer after said first hot-pressing is 1% to 20% less than the thickness of the layer of first material having carbon before said first hot-pressing. That is, the thickness of the gas diffusion layer after said first hot-pressing is 80% to 99% of the thickness of the layer of first material having carbon before said first hot-pressing;
- Said catalyst material comprises of a solvent that is a mixture of isopropyl alcohol and water;
- Said catalyst material comprises of a pore forming agent. The pore forming agent can be ammonium bicarbonate, ammonium formate, ammonium acetate or ammonium oxalate;
- Said catalyst material is a mixture comprising of: Pt/C catalyst, solvent, pore forming agent and Nafion solution;
- In said catalyst material, the ratio of: Pt/C catalyst, solvent, pore forming agent and Nafion solution is 1-30:10-100:3-30:1-10;
- The content of Pt in the Pt/C catalyst is between 20 and 40%;
- Said catalyst material is coated onto the gas diffusion layer by spray coating or brush coating;
- The second cooling is conducted either naturally or with water;
- The thickness of the gas diffusion electrode after hot pressing is between 150 and 800 microns; and
- The thickness of said gas diffusion electrode after said second hot-pressing is 1 to 20% less than the thickness of said conductive substrate with said layer of catalyst material and gas diffusion layer before said second hot-pressing. That is, the thickness of said gas diffusion electrode after second hot-pressing is 80% to 99% of the thickness said conductive substrate with said layer of catalyst material and gas diffusion layer before said second hot-pressing.

Fabrication of Membrane Electrode Assemblies

The presently preferred methods for the fabrication of the membrane electrode assemblies include the following steps:
placing and aligning a membrane between two gas diffusion electrodes;
third hot-pressing, i.e., subjecting said membrane with two gas diffusion electrodes to a predetermined pressure (third hot-pressing pressure) at a predetermined temperature (third hot-pressing temperature); and
third cooling under pressure (third cooling pressure) to form said membrane electrode assembly.

In the preferred methods, one or more of the following conditions can be selected:
- The membranes used are Nafion membranes, preferably, Nafion 112 membrane or Nafion 115 membrane or other Nafion membranes in the same series;
- The third hot-pressing is conducted at a third hot-pressing temperature of between 100°C and 140°C and a third hot-pressing pressure of between 3Mpa and 10Mpa for 30 seconds to 300 seconds;
- The third cooling is conducted either naturally or with water; and
- The thickness of the membrane electrode assembly is between 350 microns and 1700 microns.

### Fabrication of Conducting Substrates

The presently preferred methods for fabricating the conducting substrates include the following steps:
maintaining a material having carbon (second material having carbon) at a predetermined temperature (first maintenance temperature);
maintaining said second material having carbon at a predetermined temperature (second maintenance temperature); and
cooling to obtain said conductive substrate.

The presently preferred methods for fabricating said second material having carbon include the following steps:
soaking a material having carbon (fourth material having carbon) in a first PTFE material such as a first PTFE material.
removing said soaked fourth material having carbon from said first PTFE material; and
drying said soaked fourth material having carbon to form said second material having carbon.

In the preferred methods, one or more of the following conditions can be selected:
- Said fourth material having carbon can be either carbon paper or carbon cloth;
- The concentration of PTFE in said first PTFE material is between 2% and 35%;
- Said soaked fourth material having carbon is dried with heat at a temperature between 20°C and 80°C;
- The second maintenance temperature is higher than said first maintenance temperature;
- Said first maintenance temperature is between 240°C and 290°C;
- Said second maintenance temperature is between 300°C and 360°C;
- The first maintenance temperature is maintained for between 15 minutes
   and 30 minutes; and
- The second maintenance temperature is maintained for between 15 minutes and 30 minutes.

### Fabrication of Layer of first material having carbon

The preferred methods for forming the first material having carbon include the following steps:
coating a third material having carbon onto said conductive substrate;
drying;
maintaining said third material having carbon at a third maintenance temperature;
maintaining said third material having carbon at a fourth maintenance temperature; and
cooling to form said layer of first material having carbon.

In the preferred methods, one of or more of the following conditions is selected:
- Said third material having carbon can either be a paste mixture of VXC-72 carbon black and second PTFE material such as a PTFE paste, or, a paste mixture of acetylene black and second PTFE material such as a PTFE paste;
- The content of said PTFE in the second PTFE material is between 5% and 40%;
- Said third material having carbon is coated onto the gas diffusion layer by spray coating or brush coating;
- The drying of said second carbon having material conducted with heat at a temperature of between 20°C and 80°C;
- The fourth maintenance temperature is higher than the third maintenance temperature;
- Said third maintenance temperature is between 240°C and 290°C;
- Said fourth maintenance temperature is between 300°C and 360°C;
- Said third maintenance temperature is maintained for between 15 minutes and 30 minutes;
- Said fourth maintenance temperature is maintained for between 15 minutes and 30 minutes; and
- In said cooling step after maintaining said third and fourth temperatures, the cooling is conducted either naturally or with water to room temperature;

When compared to the current technologies, the three-step pressing methods of this invention, pressing the gas diffusion layer, the gas diffusion electrodes, and the membrane electrode results in tighter adhesion between the different layers such that the layers are not easily separated. The electrodes fabricated from cooling under pressurized condition after hot pressing will not easily distort or create defects. In addition, these methods also create excellent contact between the catalyst layer and proton exchange membrane. This improves the properties of the membrane electrodes. These fabrication methods are simple, easy, and have good reproducibility.

The following methods further describe this invention.

Embodiment 1

The fabrication method for the membrane electrode assembly of this embodiment includes the fabrication of the conductive substrate, the gas diffusion electrode, and finally, the membrane electrode assembly. The fabrication of the conductive substrate includes the following steps:
soaking a material having carbon (fourth material having carbon) such as carbon paper or carbon cloth, in a PTFE paste;
drying with heat at a temperature between 20°C and 80°C;
placing soaked carbon paper or carbon cloth in a furnace;
raising the furnace temperature to between 240°C and 290°C;
maintaining said temperature for 15 to 30 minutes;
raising the temperature to between 300°C and 360°C; and
retaining the temperature for 15 to 30 minutes to obtain a conductive substrate.

The fabrication of the gas diffusion layer of the gas diffusion electrode includes the following steps:
mixing VXC-72 carbon black or acetylene black with a PTFE paste to form a paste where the content of the PTFE in the PTFE paste is between 5% and 40%;
coating the conductive substrate with said paste by spray coating or brush coating;
drying said paste with heat at a temperature between 20°C and 80;
placing said conductive substrate with dried paste in a furnace;
raising the temperature to between 240°C and 290°C;
maintaining the temperature for 15 minutes to 30 minutes;
raising the temperature to between 300°C and 360°C;
maintaining the temperature for 15 to 30 minutes;
cooling to room temperature to form a layer of first material having carbon;
first hot-pressing the conductive substrate with carbon black (first material having carbon) at a temperature between 20°C and 120°C and a pressure between 0.05Mpa and 5MPa for 30seconds to 300 seconds;
first cooling naturally or with water while retaining a pressure between 0.05MPa and 5MPa to avoid distortion and obtain a gas diffusion layer with thickness between 100 and 600 microns. This thickness is between 1% and 20% less than the thickness of said layer of first material having carbon.

The fabrication of the gas diffusion electrode includes the following steps:
mixing uniformly the Pt/C catalyst, solvent, pore forming agent and Nafion solution to form a paste where the content of Pt in said Pt/C catalyst is between 20% and 40%, said solvent is a mixture of isopropyl alcohol and water; said pore forming agent are volatile chemicals such as ammonium bicarbonate, ammonium formate, ammonium acetate or ammonium oxalate; and the ratio of said catalyst: solvent: pore forming agent: Nafion solution is 1-30:10-100:3-30:1-10;
coating said catalyst paste onto the gas diffusion layer with the conductive substrate by spray coating or brush coating;
second hot-pressing at a temperature between 20°C and 120°C and a pressure between 0.05MPa and 5Mpa for 10 to 300 seconds; and
second cooling naturally or by water while maintaining a pressure of between 0.05MPa and 5MPa to avoid distortion and to obtain a gas diffusion electrode. The thickness of the gas diffusion electrode after said second hot-pressing is between 150 microns and 800 microns. This thickness is 1% to 20% less than the thickness of the conductive substrate with said gas diffusion layer and said layer of catalyst material before said second hot-pressing.

The fabrication of three-in-one membrane electrode assembly includes the following steps:
placing and aligning a Nafion membrane between the two gas diffusion electrodes with catalyst layers where the Nafion membrane used can be Nafion 112, Nafion 115 membrane or other membranes in that series;
third hot-pressing at a temperature between 100°C and 140°C and a pressure between 3MPa and 10MPa for 30 to 300 seconds; and
third cooling naturally or with water to room temperature at a pressure between 3MPa and 10MPa to avoid separation and obtain a membrane electrode assembly. The thickness of the three-in-one membrane electrode assembly after said third hot-pressing is between 350 microns and 1700 microns.

### Embodiment 2

The fabrication method of the membrane electrode assembly of this embodiment includes the fabrication of the conductive substrate, the gas diffusion electrode, and finally, the membrane electrode assembly. The fabrication of the conductive substrate includes the following steps:
soaking carbon paper in a PTFE paste where the content of the PTFE in said paste is 10%;
drying with heat at a temperature 50°C;
placing said dried paper in a furnace;
raising the temperature of said furnace to 240°C;
maintaining that temperature for 30 minutes;
raising the temperature to 360°C; and
maintaining that temperature for 30 minutes to obtain a conductive substrate.

The fabrication of the gas diffusion electrode includes the following steps:
mixing VXC-72 carbon black with a PTFE paste to form a paste, where the content of the PTFE in said paste is 10%;
spray coating the conductive substrate with said paste;
drying said coated conductive substrate with heat at 40°C;
placing said dried conductive substrate in a furnace;
raising the temperature of the furnace to 240°C;
maintaining that temperature for 30 minutes;
raising the temperature to 360°C;
maintaining that temperature for 30 minutes;
cooling to room temperature to form a layer of first material having carbon;
first hot-pressing the cooled conductive substrate with a layer of carbon black (first material having carbon) at 120°C and a pressure of 1MPa for 100;
naturally first cooling at a pressure of 1MPa to avoid distortion and obtain a gas diffusion layer with a thickness of 200 microns;
formulating the catalyst paste by mixing uniformly with ultrasound a catalyst, a solvent, a pore forming agent, and Nafion solution, where the catalyst is Pt/C and the content of said Pt is 20%, the solvent is a mixture of isopropyl alcohol and water; the pore forming agent is ammonium bicarbonate; and the ratio of the catalyst: solvent : pore forming agent: Nafion solution is 5:100:3:3;
coating the catalyst paste onto the diffusion layer where the coating method can be spray coating;
second hot-pressing at a temperature of 80°C and a pressure of 0.5MPa for 60 seconds; and
naturally second cooling at a pressure of 0.5MPa to avoid distortion and to form a gas diffusion electrode with a thickness of 220 microns.

The method for fabricating the membrane electrode assembly includes the following steps:
placing and aligning a treated Nafion 115 membrane between two gas diffusion electrodes obtained from hot pressing;
third hot-pressing at a temperature of 120°C and a pressure of 5MPa for 100 seconds;
removing from heat immediately; and
naturally third cooling to room temperature at a pressure of 5MPa to avoid separation and obtain a three-in-one membrane electrode assembly with a thickness of 470 microns.

### Embodiment 3

The fabrication method of the membrane electrode assembly of this embodiment includes the fabrication of the conductive substrate, the gas diffusion electrode, and finally, the membrane electrode assembly. The fabrication of the conductive substrate includes the following steps:
soaking carbon paper in a PTFE paste where the content of the PTFE in said paste is 5%;
drying with heat at a temperature 60°C;
placing said dried paper in a furnace;
raising the temperature of said furnace to 250°C;
maintaining that temperature for 20 minutes;
raising the temperature to 350°C; and
maintaining that temperature for 15 minutes to obtain a conductive substrate.

The fabrication of the gas diffusion electrode includes the following steps:
mixing acetylene black a PTFE paste to form a paste, where the content of the PTFE in said paste is 20%;
spray coating the conductive substrate with said paste;
drying said coated conductive substrate with heat at 80°C;
placing said dried conductive substrate in a furnace;
raising the temperature of the furnace to 250°C;
maintaining that temperature for 20 minutes;
raising the temperature to 350°C;
maintaining that temperature for 15 minutes;
cooling to room temperature to form a layer of first material having carbon;
first hot-pressing the cooled conductive substrate with a layer of carbon black (first material having carbon) at 100°C and a pressure of 0.5MPa for 30 seconds;
first cooling with water at a pressure of 0.5MPa to avoid distortion and obtain a gas diffusion layer where the thickness of the gas diffusion layer after first hot-pressing is 10% less than the thickness of the conductive substrate with said layer of first material having carbon before said first hot-pressing;
formulating the catalyst paste by mixing uniformly with ultrasound a catalyst, a solvent, a pore forming agent, and Nafion solution, where the catalyst is Abc and the content of said Pt is 40%, the solvent is a mixture of isopropyl alcohol and water; the pore forming agent is ammonium oxalate; and the ratio of the catalyst solvent : pore forming agent : Nafion solution is 6:80:10:10;
coating the catalyst paste onto the gas diffusion layer where printing can be the coating method;
second hot-pressing at a temperature of 100°C and a pressure of 1MPa for 30 seconds; and
second cooling with water at a pressure of 1MPa to avoid distortion and obtain a gas diffusion electrode, where the thickness of the gas diffusion electrode after said second hot- pressing is 12% less than the thickness of said conductive substrate with said gas diffusion layer and said layer of catalyst material before said second hot-pressing

The method for fabricating the membrane electrode assembly includes the following steps:
placing and aligning a treated Nafion 112 membrane between two gas diffusion electrodes obtained from a first and second hot-pressing;
third hot-pressing at a temperature of 130°C and a pressure of 8MPa for 200 seconds;
removing from heat immediately; and
third cooling with water room temperature at a pressure of 8MPa to avoid separation seconds and obtain a three-in-one membrane electrode assembly with a thickness of 520 microns.

### Embodiment 4

The fabrication method of the membrane electrode assembly of this embodiment includes the fabrication of the conductive substrate, the gas diffusion electrode, and finally, the membrane electrode assembly. The fabrication of the conductive substrate includes the following steps:
soaking carbon paper in a PTFE paste where the content of the PTFE in said paste is 35%;
drying with heat at a temperature 80°C;
placing said dried paper in a furnace;
raising the temperature of said furnace to 290°C;
maintaining that temperature for 15 minutes;
raising the temperature to 340°C; and
maintaining that temperature for 20 minutes to obtain a conductive substrate.

The fabrication of the gas diffusion electrode includes the following steps:
mixing acetylene black a PTFE paste to form a paste, where the content of the PTFE in said paste is 40%;
spray coating the conductive substrate with said paste;
drying said coated conductive substrate with heat at 20°C;
placing said dried conductive substrate in a furnace;
raising the temperature of the furnace to 290°C;
maintaining that temperature for 15 minutes;
raising the temperature to 340°C;
maintaining that temperature for 25 minutes;
cooling to room temperature to obtain a layer of first material having carbon;
first hot-pressing the cooled conductive substrate with a layer of carbon black (first material having carbon) at 20°C and a pressure of 5MPa for 300 seconds;
first cooling with water at a pressure of 5MPa to avoid distortion and obtain a gas diffusion layer, where the thickness of the gas diffusion layer after first hot-pressing is 600 microns, 20% less than the thickness of the layer of first material having carbon before said first hot-pressing;
formulating the catalyst paste by mixing uniformly with ultrasound a catalyst, a solvent, a pore forming agent, and Nafion solution, where the catalyst is Pt/C where the content of said Pt is 30%; the solvent is a mixture of isopropyl alcohol and water; the pore forming agent is ammonium formate; and the ratio of the catalyst : solvent : pore forming agent: Nafion solution is 30:10:30:9;
coating the catalyst paste on the diffusion layer where brush coating can be the coating method;
second hot-pressing at a temperature of 120°C and a pressure of 5MPa for 300 seconds; and
second cooling with water at a pressure of 5MPa to avoid distortion and obtain the gas diffusion electrode, where the thickness of the gas diffusion electrode after second hot-pressing is 800 microns, 20% less than the thickness of the conductive substrate with said gas diffusion layer and said layer of catalyst material before said second hot-pressing.

The method for fabricating the membrane electrode assembly includes the following steps:
placing and aligning a treated Nafion 115 membrane between two gas diffusion electrodes obtained from first and second hot-pressing;
third hot-pressing at a temperature of 140°C and a pressure of 10MPa for 300 seconds;
removing from heat immediately; and
cooling with water to room temperature at a pressure of 10MPa to avoid separation and obtain three-in-one membrane electrode assembly with a thickness of 1700 microns.

### Embodiment 5

The fabrication method of the membrane electrode assembly of this embodiment includes the fabrication of the conductive substrate, the gas diffusion electrode, and finally, the membrane electrode assembly. The fabrication of the conductive substrate includes the following steps:
soaking carbon paper in a PTFE paste where the content of the PTFE in said paste is 2%;
drying with heat at a temperature 20°C;
placing said dried paper in a furnace;
raising the temperature of said furnace to 260°C;
maintaining that temperature for 25 minutes;
raising the temperature to 300°C; and
maintaining that temperature for 23 minutes to obtain a conductive substrate.

The fabrication of the gas diffusion electrode includes the following steps:
mixing acetylene black a PTFE paste to form a paste, where the content of the PTFE in said paste is 5%;
spray coating the conductive substrate with said paste;
drying said coated conductive substrate with heat at 50°C;
placing said dried conductive substrate in a furnace;
raising the temperature of the furnace to 250°C;
maintaining that temperature for 26 minutes;
raising the temperature to 300°C;
maintaining that temperature for 23 minutes;
cooling to room temperature to form a layer of first material having carbon;
first hot-pressing the cooled conductive substrate with a layer of carbon black (first material having carbon) at 60°C and a pressure of 0.05MPa for 100 seconds;
first cooling with water at a pressure of 0.05MPa to avoid distortion and obtain a gas diffusion layer, where the thickness of the gas diffusion layer after first hot-pressing is 100 microns, 1% less than the thickness of the layer of first material having carbon before said first hot-pressing;;
formulating the catalyst paste by mixing uniformly with ultrasound a catalyst, a solvent, a pore forming agent, and Nafion solution, where the catalyst is Pt/C where the content of said Pt is 20%; the solvent is a mixture of isopropyl alcohol and water; the pore forming agent is ammonium acetate; and the ratio of the catalyst solvent: pore forming agent : Nafion solution is 1:15:5:1;
coating the catalyst paste on the diffusion layer where spray coating can be the coating method;
second hot-pressing at a temperature of 20°C and a pressure of 0.05MPa for 10 seconds; and
second cooling with water at a pressure of 0.05Mpa to avoid distortion and obtain a gas diffusion electrode, where the thickness of the gas diffusion electrode after said second hot-pressing is 150 microns, 1% less than the thickness of the conductive substrate with said gas diffusion layer and said layer of catalyst material before said second hot-pressing.

The method for fabricating the membrane electrode assembly includes the following steps:
placing and aligning a treated Nafion 112 membrane between two gas diffusion electrodes obtained from the first and second hot-pressing;
third hot-pressing at a temperature of 100°C and a pressure of 3MPa for 30 seconds;
removing from heat immediately; and
third cooling with water to room temperature at a pressure of 3MPa to avoid separation and obtain a a three-in-one membrane electrode assembly with a thickness of 350 microns.

While the present invention has been described with reference to certain preferred embodiments, it is to be understood that the present invention is not limited to such specific embodiments. Rather, it is the inventor's contention that the invention be understood and construed in its broadest meaning as reflected by the following claims. Thus, these claims are to be understood as incorporating not only the preferred embodiments described herein but all those other and further alterations and modifications as would be apparent to those of ordinary skilled in the art.

## Claims

1. A method for fabricating a gas diffusion electrode, comprising the steps of:
- forming a layer of first material having carbon onto a conductive substrate;
- first hot-pressing said conductive substrate with said layer of first material having carbon at a first hot-pressing pressure and at a first hot-pressing temperature, said first hot-pressing being conducted at a first hot-pressing temperature of between 20°C and 120°C and with a first hot-pressing pressure of between 0.05 and 5 Mpa for 30 seconds to 300 seconds;
- first cooling at a first cooling pressure, said first cooling being conducted with a first cooling pressure of between 0.05 Mpa and 5 Mpa, thereby forming said gas diffusion layer on said conductive substrate;
- coating a layer of catalyst material onto said gas diffusion layer;
- second hot-pressing at a second hot-pressing pressure and at a second hot-pressing temperature, said second hot-pressing being conducted at a second hot-pressing temperature of between 20°C and 120°C and a second hot-pressing pressure of between 0.05 Mpa and 5 Mpa for 10 seconds to 300 seconds; and
- second cooling at a second cooling pressure, said second cooling being conducted with a second cooling pressure of between 0.05 Mpa and 5 Mpa, thereby forming said gas diffusion electrode.

2. The method according to claim 1, wherein
a method for fabricating said conductive substrate comprises the steps of:
- maintaining a second material having carbon at a first maintenance temperature for a first maintenance time; and
- maintaining said second material having carbon at a second maintenance temperature for a second maintenance time to obtain said conductive substrate,
and wherein said first maintenance time or said second maintenance time is independently of 15 minutes to 30 minutes, and wherein said first maintenance temperature is between 240°C and 290°C, and said second maintenance temperature is between 300°C and 360°C.

3. The method according to claim 2, wherein
the method for fabricating said second material having carbon comprising the step of soaking a fourth material having carbon in a first PTFE material wherein the content of the PTFE in said first PTFE material is between 2% and 35%.

4. The method according to one of the preceding claims, wherein
said step of forming the layer of first material having carbon onto the conductive substrate comprises the sub-steps of:
- coating a layer of third material having carbon onto said conductive substrate;
- maintaining said third material having carbon at a third maintenance temperature for a third maintenance time;
- maintaining said third material having carbon at a fourth maintenance temperature for a fourth maintenance time; and
- optionally, cooling to form said layer of first material having carbon onto said conductive substrate,
and wherein said third maintenance time or fourth maintenance time is independently of 15 minutes to 30 minutes, and wherein said third maintenance temperature is between 240°C and 290°C, and said fourth maintenance temperature is between 300°C and 360°C.

5. The method according to claim 4, wherein
said third material having carbon is a mixture of a second PTFE material and a carbon material selected from the group consisting of: VXC-72 carbon black, acetylene black.

6. The method according to one of the preceding claims, wherein
said first hot-pressing temperature and second hot-pressing temperature are independently between 20C and 120°C, said first hot-pressing pressure and second hot-pressing pressure are independently between 0.05 Mpa and 5 Mpa, and said first cooling pressure and second cooling pressure are independently between 0.05 Mpa and 5Mpa.

7. The method according to one of the preceding claims, wherein
the thickness of said gas diffusion layer is 80% to 99% of the thickness of said layer of first material having carbon before said first hot-pressing step, and the thickness of said gas diffusion electrode is 80% to 99% of the thickness of said conductive substrate with said gas diffusion layer and said layer of catalyst material before said second hot-pressing step.

8. The method according to one of the preceding claims, wherein
said catalyst material is a mixture comprising of: Pt/C catalyst, solvent, pore forming agent and Nafion solution.

9. The method according to claim 8, wherein
the ratio of Pt/C catalyst: solvent: pore forming agent : Nafion solution is 1-30 :
10-100 : 3-30 : 1-10, said solvent is a mixture of isopropyl alcohol and water, and said pore forming agent is at least one ammonium compound selected from the group consisting of: ammonium bicarbonate, ammonium formate, ammonium acetate or ammonium oxalate.

10. A method for fabricating a membrane electrode assembly for a proton exchange fuel cells, comprising the steps of:
- fabricating a gas diffusion electrode using a method according to one of the preceding claims;
- placing a membrane between two gas diffusion electrodes wherein each gas diffusion electrode is a gas diffusion electrode that is obtained after said second cooling step;
- third hot-pressing at a third hot-pressing pressure and a third hot-pressing temperature; and
- third cooling at a third cooling pressure to obtain said membrane electrode
assembly,
wherein said third hot-pressing temperature is between 100°C and 140°C, said third hot-pressing pressure is between 3 Mpa and 10 Mpa, and said third cooling pressure is between 3 Mpa and 10 Mpa.

11. The method according to claim 10, wherein
the thickness of said membrane electrode assembly is 80% to 99% of the thickness of said membrane with two gas diffusion electrodes, before said third hot-pressing step.

## Patentansprüche

1. Verfahren zur Herstellung einer Gasdiffusionselektrode, das die Schritte aufweist:
- Ausbilden einer Schicht aus einem ersten Material, das Kohlenstoff enthält, auf einem leitfähigen Substrat;
- ein erstes Heißpressen des leitfähigen Substrats mit der Schicht aus dem ersten kohlenstoffhaltigen Material bei einem ersten Heißpressdruck und einer ersten Heißpresstemperatur, wobei das erste Heißpressen bei einer ersten Heißpresstemperatur zwischen 20°C und 120°C und bei einem ersten Heißpressdruck zwischen 0,05 und 5 MPa 30 bis 300 Sekunden lang ausgeführt wird;
- ein erstes Abkühlen bei einem ersten Abkühldruck, wobei das erste Abkühlen bei einem ersten Abkühldruck zwischen 0,05 MPa und 5 MPa ausgeführt wird, wodurch die Gasdiffusionsschicht auf dem leitfähigen Substrat gebildet wird;
- Aufbringen einer Schicht aus Katalysatormaterial auf der Gasdiffusionsschicht;
- ein zweites Heißpressen bei einem zweiten Heißpressdruck und einer zweiten Heißpresstemperatur, wobei das zweite Heißpressen bei einer zweiten Heißpresstemperatur zwischen 20°C und 120°C und bei einem zweiten Heißpressdruck zwischen 0,05 und 5 MPa 10 bis 300 Sekunden lang ausgeführt wird;
und
- ein zweites Abkühlen bei einem zweiten Abkühldruck, wobei das zweite Abkühlen bei einem zweiten Abkühldruck zwischen 0,05 MPa und 5 MPa ausgeführt wird, wodurch die Gasdiffusionselektrode gebildet wird.

2. Verfahren nach Anspruch 1, bei dem
ein Verfahren zur Herstellung des leitfähigen Substrats die Schritte aufweist:
- Halten eines zweiten Materials, das Kohlenstoff enthält, auf einer ersten Haltetemperatur während einer ersten Haltezeit; und
- Halten des zweiten kohlenstoffhaltigen Materials auf einer zweiten Haltetemperatur während einer zweiten Haltezeit, um das leitfähige Substrat zu erhalten,
und bei dem die erste oder die zweite Haltezeit unabhängig voneinander zwischen 15 und 30 Minuten betragen kann, und bei dem die erste Haltetemperatur zwischen 240°C und 290°C und die zweite Haltetemperatur zwischen 300°C und 360°C beträgt.

3. Verfahren nach Anspruch 2, bei dem
das Verfahren zur Herstellung des zweiten kohlenstoffhaltigen Materials den Schritt des Durchwärmens eines vierten Materials, das Kohlenstoff in einem ersten PTFE-Material enthält, aufweist, wobei der Anteil des PTFE im ersten PTFE-Material zwischen 2% und 35% beträgt.

4. Verfahren nach einem der vorigen Ansprüche, bei dem der Schritt der Ausbildung der ersten Schicht aus kohlenstoffhaltigem Material auf dem leitfähigen Substrat die Unterschritte aufweist:
- Aufbringen einer Schicht aus einem dritten Material, das Kohlenstoff enthält, auf dem leitfähigen Substrat;
- Halten des dritten kohlenstoffhaltigen Materials auf einer dritten Haltetemperatur während einer dritten Haltezeit;
- Halten des dritten kohlenstoffhaltigen Materials auf einer vierten Haltetemperatur während einer vierten Haltezeit; und
- wahlweise Abkühlen zum Ausbilden der Schicht aus dem ersten kohlenstoffhaltigen Material auf dem leitfähigen Substrat,
und bei dem die dritte oder die vierte Haltezeit unabhängig voneinander zwischen 15 und 30 Minuten betragen kann, und bei dem die dritte Haltetemperatur zwischen 240°C und 290°C und die vierte Haltetemperatur zwischen 300°C und 360°C beträgt.

5. Verfahren nach Anspruch 4, bei dem
das dritte kohlenstoffhaltige Material ein Gemisch aus einem zweiten PTFE-Material und einem Kohlenstoffmaterial ist, das aus einer Gruppe bestehend aus VXC-72 Ruß und Acetylen-Ruß gewählt wird.

6. Verfahren nach einem der vorigen Ansprüche, bei dem die erste und die zweite Heißpresstemperatur unabhängig voneinander zwischen 20°C und 120°C betragen kann, der erste und der zweite Heißpressdruck zwischen 0,05 MPa und 5 MPa und der erste sowie der zweite Abkühldruck zwischen 0,05 MPa und 5 MPa beträgt.

7. Verfahren nach einem der vorigen Ansprüche, bei dem die Dicke der Gasdiffusionsschicht 80% bis 99% der Dicke der Schicht aus dem ersten kohlenstoffhaltigen Material vor dem ersten Heißpressschritt beträgt und die Dicke der Gasdiffusionselektrode 80% bis 99% der Dicke des leitfähigen Substrats mit der Gasdiffusionsschicht und der Schicht aus dem Katalysatormaterial vor dem zweiten Heißpressschritt beträgt.

8. Verfahren nach einem der vorigen Ansprüche, bei dem
das Katalysatormaterial ein Gemisch bestehend aus Pt/C-Katalysator, Lösungsmittel, Porenbildungsmittel und Nafion-Lösung ist.

9. Verfahren nach Anspruch 8, bei dem
das Verhältnis aus Pt/C-Katalysator : Lösungsmittel : Porenbildungsmittel : Nafion-Lösung (1 - 30) : (10 - 100) : (3 - 30) : (1 - 10) ist, wobei das Lösungsmittel ein Gemisch aus Isopropylalkohol und Wasser ist, und das Porenbildungsmittel mindestens eine Ammoniumverbindung ist, die aus der Gruppe bestehend aus Ammoniumbicarbonat, Ammoniumformat, Ammoniumacetat oder Ammoniumoxalat gewählt wird.

10. Verfahren zur Herstellung einer Membranelektroden-Baugruppe für eine Protonenaustausch-Brennstoffzelle, das die Schritte aufweist:
- Herstellen einer Gasdiffusionselektrode mittels eines Verfahrens nach einem der vorigen Ansprüche;
- Anordnen einer Membran zwischen zwei Gasdiffusionselektroden, wobei jede Gasdiffusionselektrode eine Gasdiffusionselektrode ist, die nach dem zweiten Abkühlschritt erhalten wird;
- ein drittes Heißpressen bei einem dritten Heißpressdruck und einer dritten Heißpresstemperatur; und
- ein dritten Abkühlen bei einem dritten Abkühldruck, um die Membranelektrodenbaugruppe zu erhalten,
wobei die dritte Heißpresstemperatur zwischen 100°C und 140°C, der dritte Heißpressdruck zwischen 3 MPa und 10 MPa und der dritte Abkühldruck zwischen 3 MPa und 10 MPa beträgt.

11. Verfahren nach Anspruch 10, bei dem
die Dicke der Membranelektrodenbaugruppe 80% bis 99% der Dicke der Membran mit zwei Gasdiffusionselektroden vor dem dritten Heißpressschritt beträgt.

## Revendications

1. Procédé pour fabriquer une électrode de diffusion gazeuse, comprenant les étapes consistant à :
- former une couche d'un premier matériau ayant du carbone sur un substrat conducteur ;
- effectuer un premier pressage à chaud dudit substrat conducteur avec ladite couche de premier matériau ayant du carbone à une première pression de pressage à chaud et une première température de pressage à chaud, ledit premier pressage à chaud étant mené à une première température de pressage à chaud entre 20° C et 120° C et avec une première pression de pressage à chaud entre 0,05 est 5 Mpa pendant 30 secondes à 300 secondes ;
- effectuer un premier refroidissement à une première pression de refroidissement, ledit premier refroidissement étant mené avec une première pression de refroidissement entre 0,05 Mpa et 5 Mpa, formant ainsi ladite couche de diffusion gazeuse sur ledit substrat conducteur ;
- revêtir une couche de matériau catalyseur sur ladite couche de diffusion gazeuse ;
- effectuer un second pressage à chaud à une seconde pression de pressage à chaud et à une seconde température de pressage à chaud, ledit second pressage à chaud étant mené à une seconde température de pressage à chaud entre 20° C et 120° C et une seconde température de pressage à chaud entre 0,05 Mpa et 5Mpa pendant 10 secondes à 300 secondes ; et
- effectuer un second refroidissement à une seconde pression de refroidissement, ledit second refroidissement étant mené avec une seconde pression de refroidissement entre 0,05 Mpa et 5 Mpa, formant ainsi ladite électrode de diffusion gazeuse.

2. Procédé selon la revendication 1, dans lequel un procédé pour fabriquer ledit substrat conducteur comprend les étapes consistant à :
- maintenir un second matériau ayant du carbone à une première température de maintenance pendant une première durée de maintenance ; et
- maintenir ledit second matériau ayant du carbone à une seconde température de maintenance pendant une seconde durée de maintenance pour obtenir ledit substrat conducteur,
et dans lequel ladite première durée de maintenance ou ladite seconde durée de maintenance est indépendamment 15 minutes à 30 minutes, et dans lequel ladite première température de maintenance est entre 240°C et 290°C, et ladite seconde température de maintenance est entre 300°C et 360°C.

3. Procédé selon la revendication 2, dans lequel le procédé pour fabriquer ledit second matériau ayant du carbone comprend l'étape consistant à imprégner un quatrième matériau ayant du carbone dans un premier matériau au PTFE, dans lequel la teneur en PTFE dans ledit premier matériau au PTFE est entre 2 % et 35 %.

4. Procédé selon l'une des revendications précédentes, dans lequel ladite étape de formation de la couche d'un premier matériau ayant du carbone sur le substrat conducteur comprend les sous-étapes consistant à :
- revêtir une couche d'un troisième matériau ayant du carbone sur ledit substrat conducteur ;
- maintenir ledit troisième matériau ayant du carbone à une troisième température de maintenance pendant une troisième durée de maintenance ;
- maintenir ledit troisième matériau ayant du carbone à une quatrième température de maintenance pendant une quatrième durée de maintenance ; et
- en option, effectuer un refroidissement pour former ladite couche de premier matériau ayant du carbone sur ledit substrat conducteur,
et dans lequel ladite troisième durée de maintenance ou ladite quatrième durée de maintenance est indépendamment de 15 minutes à 30 minutes, et dans lequel ladite troisième température de maintenance est entre 240°C et 290°C, et ladite quatrième température de maintenance est entre 300°C et 360°C.

5. Procédé selon la revendication 4, dans lequel ledit troisième matériau ayant du carbone est un mélange d'un second matériau au PTFE et d'un matériau au carbone choisi parmi le groupe comprenant du noir de carbone VXC-72 et du noir d'acétylène.

6. Procédé selon l'une des revendications précédentes, dans lequel ladite première température de pressage à chaud et ladite seconde températures de pressage à chaud sont indépendamment entre 20°C et 120°C, ladite première pression de pressage à chaud et ladite seconde pression de pressage à chaud sont indépendamment entre 0,05 Mpa et 5 Mpa, et ladite première pression de refroidissement et ladite seconde pression de refroidissement sont indépendamment entre 0,05 Mpa et 5 Mpa.

7. Procédé selon l'une des revendications précédentes, dans lequel l'épaisseur de ladite couche de diffusion gazeuse est de 80 % à 99 % de l'épaisseur de ladite couche de premier matériau ayant du carbone avant ladite première étape de pressage à chaud, et l'épaisseur de ladite électrode de diffusion gazeuse est de 80 % à 99 % de l'épaisseur dudit substrat conducteur avec ladite couche de diffusion gazeuse et ladite couche de matériau catalyseur avant ladite seconde étape de pressage à chaud.

8. Procédé selon l'une des revendications précédentes, dans lequel ledit matériau catalyseur est un mélange comprenant un catalyseur Pt/C, un solvant, des agents de formation de pores et une solution de Nafion.

9. Procédé selon la revendication 8, dans lequel
le rapport catalyseur Pt/C : solvant : agent de formation de pores :
solution de Nafion est 1-30:10-100:3-30:1-10, ledit solvant est un mélange d'alcool isopropyle et d'eau, et ledit agent de formation de pores est au moins un composé ammonium choisi parmi le groupe comprenant : bicarbonate d'ammonium, formate d'ammonium, acétate d'ammonium ou oxalate d'ammonium.

10. Procédé pour fabriquer un ensemble d'électrode à membrane pour des piles à combustible à échange de protons, comprenant les étapes consistant à :
- fabriquer une électrode de diffusion gazeuse en utilisant un procédé selon l'une des revendications précédentes ;
- placer une membrane entre deux électrodes de diffusion gazeuse, dans lesquelles chaque électrode de diffusion gazeuse est une électrode de diffusion gazeuse qui est obtenue après ladite seconde étape de refroidissement ;
- effectuer un troisième pressage à chaud à une troisième pression de pressage à chaud et sous une troisième température de pressage à chaud ; et
- effectuer un troisième refroidissement à une troisième pression de refroidissement pour obtenir ledit ensemble d'électrode à membrane, dans lequel ladite troisième température de pressage à chaud est entre 100°C et 140°C, ladite troisième pression de pressage à chaud est entre 3 Mpa et 10 Mpa, et ladite troisième pression de refroidissement est entre 3 Mpa et 10 Mpa.

11. Procédé selon la revendication 10, dans lequel l'épaisseur dudit ensemble d'électrode à membrane est de 80 % à 99 % de l'épaisseur de ladite membrane avec deux électrodes de diffusion gazeuse, avant ladite troisième étape de pressage à chaud.
